Europäisches Patentamt

European Patent Office

Office européen des brevets

(19)

(11) Numéro de publication: **0 157 703**
**B1**

## (12) FASCICULE DE BREVET EUROPÉEN

(45) Date de publication du fascicule du brevet:
**31.05.89**

(51) Int. Cl.⁴: **C 01 B 33/193**

(21) Numéro de dépôt: **85400619.4**

(22) Date de dépôt: **29.03.85**

(54) **Nouvelle silice précipitée à caractères morphologiques améliorés, procédé pour son obention et application, notamment comme charge.**

(30) Priorité: **06.04.84 FR 8405460**

(43) Date de publication de la demande:
**09.10.85 Bulletin 85/41**

(45) Mention de la délivrance du brevet:
**31.05.89 Bulletin 89/22**

(84) Etats contractants désignés:
**AT BE CH DE FR GB IT LI LU NL SE**

(56) Documents cité:
**EP-A-0 031 271**
**DE-A-2 344 316**
**DE-A-2 344 805**
**FR-A-2 257 326**
**FR-A-2 353 486**

**CHEM.-ING.-TECH., vol. 48, no. 11, novembre 1976, pages 922-933; H. FERCH: "Pulverförmige amorphe synthetische Kieselsäure-Produkte Herstellung und Charakterisierung"**

(73) Titulaire: **RHONE- POULENC CHIMIE, 25, quai Paul Doumer, F-92408 Courbevoie Cédex (FR)**

(72) Inventeur: **Chevallier, Yvonick, 19, Allée des Géraniums, F-69150 Decines (FR)**
Inventeur: **Morawski, Jean- Claude, 10, rue des Primevères, F-69680 Chassieu (FR)**

(74) Mandataire: **Dubruc, Philippe, RHONE- POULENC INTERSERVICES Service Brevets Chimie 25, quai Paul- Doumer, F-92408 Courbevoie Cédex (FR)**

## Description

La présente invention a trait à une silice précipitée à caractères morphologiques améliorés, un procédé pour son obtention et à ses applications, notamment comme charge.

Plus précisément, l'invention a trait à une silice à prise d'huile élevée.

On sait que la préparation des silices précipitées obéit à un processus complexe qui suppose la formation d'espèces monomères, la polymérisation de ces espèces avec apparition d'un gel et rupture du gel, le gel étant défini comme par ILER - Colloïd Chemistry of Silica and Silicates - 1955 p. 130 - Cornell University Press N.Y.

On a cherché, depuis longtemps, à maîtriser cette préparation. Ainsi, dans le FR-1 064 230, on cite, parmi les conditions opératoires à observer:

1) la teneur en $SiO_2$ de la solution de silicate alcalin
2) la concentration du sel de métal alcalin soluble (tel que le chlorure de sodium) dans la solution de silicate
3) la température de réaction
4) la vitesse d'addition de l'acide à la solution
5) les autres composants se trouvant dans l'acide utilisé.

ILER (US-2 731 326 et 2 765 242) propose de former un sol de particules ultimes et de coaguler ces particules en agrégats, ou de gélifier le sol et de renforcer la structure du gel ainsi obtenu.

Cet enseignement a été repris dans l'US-3 954 944 selon lequel:

- on fait une addition simultanée d'acide sulfurique et d'une solution de silicate sur un pied de cuve aqueux, l'addition d'acide et de silicate étant réglée jusqu'à une concentration en silice et un degré de neutralisation appropriés,
- on mûrit le sol obtenu,
- on flocule le sol mûri par introduction d'un sel de métal alcalin (généralement NaCl),
- on fait une addition complémentaire d'un acide seul ou d'acide et de silicate jusqu'à un pH déterminé.

Or, si les documents cités préconisant l'addition d'un électrolyte lors de la précipitation de la silice sont nombreux, les actes de polymérisation des espèces siliciques et la réaction de floculation des espèces colloïdales en résultant sous l'effet du sel présent et ajouté se manifestent de façon compétitive. En effet, théoriquement, on observe que, ainsi qu'exposé par ILER, à partir de la formation d'un sol, on peut avoir une croissance par floculation ou par polycondensation. (US-3 969 266.)

Ce qui se traduit par un contrôle très difficile des caractères morphologiques et d'autant plus difficile que l'on veut répondre aux exigences d'un procédé industriel et notamment: concentration en réactif élevée, temps courts, minimum d'opérations unitaires, coûts en énergie et en investissements réduits.

Ainsi, selon le brevet français 1 064 230 déjà cité, il est en particulier connu que si l'on traite par de l'acide carbonique une solution de silicate contenant du chlorure de sodium, on peut abaisser la surface spécifique (BET) de la silice en augmentant la teneur en chlorure de sodium.

Ceci rejoint l'enseignement de R.K. ILER dans "COLLOID CHEMISTRY OF SILICA AND SILICATES" (Cornell University Press - 1955 - p. 108) selon lequel, à un pH supérieur à 4 ou 5, le sol devient plus instable et se gélifie plus rapidement si on ajoute un électrolyte.

Toutefois, le même auteur, vingt cinq ans plus tard (THE CHEMISTRY OF SILICA - John WILEY & SONS - p. 374) reconnaît que, en dépit d'un demi-siècle de recherche, le mécanisme de la coagulation par les électrolytes n'est pas encore complètement compris.

Ceci veut dire que, aujourd'hui, la compréhension des phénomènes n'est pas suffisante pour que l'on puisse prévoir les conditions qui conduisent à des silices de types déterminés.

Ceci fait que, jusqu'à présent, on est resté limité dans l'amélioration des caractéristiques des silices précipitées.

Par ailleurs, on sait qu'une seule caractéristique telle que surface spécifique, prise d'huile, est insuffisante pour décrire une silice et même apprécier son comportement dans une application donnée.

Ces difficultés ont fait que certaines applications sont restées dans le domaine réservé des silices de combustion. Malheureusement, celles-ci ont des prix de revient très élevés par rapport aux silices précipitées.

Dans la demande européenne 31 271, un progrès important a été revendiqué en ce qui concerne des silices de précipitation approchant les valeurs correspondantes des silices de combustion pour ce qui concerne le couple surface spécifique - prise d'huile, mais en restant malheureusement limité, notamment en ce qui concerne le procédé d'obtention des silices.

La demande de brevet français 2 353 486 décrit aussi des silices utilisables au renforcement des élastomères grâce à une morphologie adaptée. Toutefois, ces silices ont une surface CTAB qui ne dépasse pas 125 $m^2$/g et une prise d'huile qui reste faible. Ces silices ne sont pas non plus microporeuses.

La présente invention a pour objet une silice qui présente un couple surface spécifique - prise d'huile améliorée.

Elle a également trait à un procédé qui permet d'obtenir de telles silices.

Enfin, elle est relative à l'application des silices, notamment comme charge dans les polymères, de type silicone, très exigeant quant aux propriétés électriques, ou comme charge renforçante dans les caoutchoucs,

EP 0 157 703 B1

ou enfin dans le renforcement des polymères thermoplastiques.

La silice de précipitation selon l'invention présente une surface BET comprise entre 50 et 350 m²/g et se caractérise par le fait qu'elle présente pour des surfaces spécifiques CTAB croissantes, un rapport du couple indice d'huile DBP/CTAB décroissant lorsque les surfaces CTAB croissent tel que le rapport DBP/CTAB soit compris entre:

- 7 et 4 pour un intervalle de CTAB compris entre 50 - 100 m²/g
- 4 et 2,5 pour un intervalle de CTAB compris entre 100 - 200 m²/g la silice présentant pour cet intervalle de CTAB un rapport surface BET/surface CTAB compris entre 1 et 1,2
- 2,5 et 2 pour un intervalle de CTAB compris entre 200 - 250 m²/g
- 2 et 1,5 pour un intervalle de CTAB compris entre 250 - 300 m²/g
- 1,5 et 1,2 pour un intervalle de CTAB compris entre 300 - 350 m²/g

Selon l'invention, on se maintient à une valeur élevée de prise d'huile (DBP), en particulier dans le domaine des silices à grandes surfaces CTAB et ceci est un résultat très important, notamment dans le domaine du renforcement des élastomères et des épaississants.

La surface CTAB est la surface externe appréciée par absorption de bromure de céthyl triméthyl ammonium à pH 9 selon la méthode exposée par JAY, JANZEN et C. KRAUS dans "Rubber Chemistry and Technology" 44 (1971) p. 1287 - 1296.

La prise d'huile est appréciée selon la méthode décrite dans la norme française NF.T 30-022 (Mars 1953) en mettant en oeuvre comme huile le phtalate de dibutyle (D.B.P.).

Les silices selon l'invention peuvent, en particulier, être non microporeuses, c'est-à-dire présenter un rapport

$\frac{\text{Surface BET}}{\text{Surface CTAB}}$ compris entre 1 et 1, 2

Par ailleurs, dans le cas où l'on veut les mettre en oeuvre dans des polymères exigeant des qualités d'isolation électrique, tels que silicones, elles présentent une teneur en sodium résiduel faible, compatible avec l'application en usage.

Ces silices peuvent être présentées sous forme pulvérulente, éventuellement broyée, la taille des particules dépendant également de l'application envisagée.

Enfin, le pH de ces silices varie selon l'application envisagée entre 3,5 et 7,5.

L'invention a également trait à un procédé selon lequel on fait réagir une solution aqueuse de silicate de sodium et une solution aqueuse d'acide, avec arrêt au gel et mûrissement intermédiaire et ajout d'un électrolyte, dans des conditions particulières.

En effet, comme dit précédemment, l'ajout d'électrolyte selon l'état de l'art conduit à un abaissement de la surface spécifique.

Or, la demanderesse a trouvé que, de manière inattendue, on pouvait observer, dans certaines conditions, une amélioration du couple prise d'huile/surface spécifique qui peut même se traduire par un maintien de la valeur de la surface spécifique, ce qui est contraire à l'état de l'art.

La demanderesse a observé que cette modification des résultats pouvait être obtenue en jouant sur un ensemble de paramètres.

Le procédé de l'invention comprend les étapes suivantes:

a) formation d'un pied de cuve renfermant une partie du silicate total utilisé
b) addition d'un acide jusqu'à apparition du gel
c) observation d'un arrêt de l'ajout d'acide et mûrissement du gel
d) addition d'acide
e) postraitement
f) filtration, lavage et séchage de la suspension et récupération du produit obtenu

Il se caractérise par le fait que:

- le pied de cuve à l'étape (a) renferme au moins 60 % en poids de silicate total utilisé,
- a l'étape (b), on règle le couple temps/température de manière à provoquer la gélification entre 10 et 50 minutes,
- on observe un arrêt à la gélification de 5 à 30 minutes,
- après arrêt, on reprend l'addition d'acide jusqu'à obtenir un pH au plus égal à 9, puis on effectue un postraitement,
- on introduit un électrolyte dans au moins une des étapes (a), (b), (c), (d) et (e).

Le post-traitement est généralement constitué par une addition simultanée des réactifs à pH compris entre 7 et 9, puis acidification jusqu'à la valeur finale. Il peut, dans certains cas, être constitué par un traitement acide à pH décroissant.

L'électrolyte est en particulier constitué par un sel du groupe des sels de métaux alcalins et alcalino-terreux.

Ainsi, selon l'invention, l'électrolyte peut être amené, soit avant, soit après l'apparition du gel ou à l'apparition du gel, en une ou plusieurs fois.

3

De manière surprenante, la demanderesse a observé que, même dans le cas où cet ajout se faisait avant apparition du gel, il était possible d'obtenir une surface spécifique élevée et corrélativement une prise d'huile importante.

Avantageusement, la concentration en électrolyte est comprise entre 0,05 et 0,7 mole par litre de sel du volume réactionnel, au moment de l'ajout, dans le cas où le sel (ou électrolyte) est constitué par un sel de métal alcalin et entre 0,001 et 0,01 mole par litre de sel, dans le cas où l'électrolyte est constitué par un sel de métal alcalino-terreux.

Selon un mode avantageux de mise en oeuvre, l'acide est constitué par un acide concentré et notamment par de l'acide sulfurique.

Mais on peut faire appel à d'autres agents acidifiants liquides ou gazeux ($CO_2$).

Le procédé selon l'invention permet de faire appel à des températures de réaction élevées, de l'ordre de 70 à 95°C et à des temps de réaction compatibles avec les exigences d'une exploitation industrielle.

Selon l'invention, on peut conserver la même température pendant toute la réaction ou adopter un profil de température non uniforme.

On peut, en particulier, effectuer une montée en température lors de l'étape (d).

Le séchage et les opérations ultérieures doivent être tels qu'ils ne portent pas préjudice à la structure de la silice obtenue lors de la précipitation.

Un moyen de séchage avantageux consiste à mettre en oeuvre un procédé d'après le FR-A-2 257 326 selon lequel on forme un écoulement puits-tourbillon symétrique, avec un gaz chaud, à grande quantité de mouvement et on introduit la suspension selon l'axe de symétrie de rotation de cet écoulement, dans la zone de dépression relative de cet écoulement, la quantité de mouvement dudit écoulement puits-tourbillon symétrique par rapport au flux axial de la suspension étant suffisante pour provoquer la rupture du flux axial, sa dispersion, sa prise en charge.

Les silices selon l'invention sont, en particulier, remarquables dans le renforcement des élastomères, tels que caoutchoucs, en particulier, dans l'amélioration de la résistance à l'abrasion.

Mais la présente invention sera plus aisément comprise à l'aide des exemples suivants, donnés à titre illustratif.

Dans tous les exemples, le séchage est réalisé en mettant en oeuvre un dispositif selon le FR-2 257 326 avec une température d'entrée des gaz de 500°C et de sortie de 150°C.

Par ailleurs, la prise d'huile est faite selon la norme française NF T 30-0-22 en choisissant le phtalate de dibutyle (DBP) comme huile et le volume spécifique Vo est déterminé comme suit:

- dans une matrice de diamètre intérieur égal à 25 mm et de hauteur égale à 80 mm, on ajoute 3 g de silice, puis dispose au-dessus un piston sur lequel on ajoute un poids déterminé de manière à exercer sur la silice une pression de $4 \cdot 10^5$ Pa. Le volume spécifique de la silice est alors mesuré. C'est le volume "$V_o$" exprimé en $cm^3/g$ (volume initial).

On a récapitulé dans le tableau ci-après les valeurs des surfaces spécifiques CTAB et d'huile DBP. Sauf indication contraire, les valeurs des surfaces BET sont identiques à celles des surfaces CTAB.

**Tableau**

| Exemples | Surface CTAB | Prise d'huile DBP |
|---|---|---|
| 1 | 200 | 466 |
| 2 | 140 | 428 |
| 3 | 120 | 388 |
| 4 | 100 | 374 |
| 5 | 110 | 400 |
| 6 | 200 | 500 |
| 7 | 175 | 464 |
| 8 | 250 | 500 |
| 9 | 130 | 490 |
| 10 | 165 | 510 |
| 11 | 200 | 500 |
| 12 | 180 | 496 |
| 13 | 166 | 502 |
| 14 | 320 | 380 |
| 15 | 200 | 500 |
| 16 | 125 | 400 |
| 17 | 270 | 420 |
| 18 | 255 | 410 |
| 19 | 300 | 410 |
| 20 | 55 | 290 |
| 21 | 93 | 380 |

## Exemple 1

On réalise une précipitation de référence <u>sans ajout</u> de sel. Dans un réacteur en acier inoxydable d'un volume de 20 litres, muni d'un système d'agitation (turbine Lightnin à 6 pales et de 4 contrepales disposées à 90°), muni également d'un système de chauffage par double enveloppe, on introduit sous agitation et à température ambiante:

- 11,47 litres d'eau distillée
- 2 litres de silicate de sodium aqueux de rapport pondéral $SiO_2/Na_2O$ égal à 3,37 et contenant 370 g de $SiO_2$ par litre

Le mélange ainsi obtenu est porté sous agitation à 90°C $\pm$ 1°C en 30 minutes environ. On procède ensuite à la réaction de précipitation de la silice, la température étant maintenue à 90°C $\pm$ 1°C, la vitesse d'agitation est fixée à 350 t/min.

On introduit au sein du mélange, à l'aide d'une pompe doseuse, une solution aqueuse d'acide sulfurique contenant 366 g de $H_2SO_4$ par litre. Cette introduction est réalisée à raison d'un débit de 12 ml par minute. Après 37 min 30 sec de réaction, on note la parution du gel, on arrête alors l'introduction d'acide et on procède à un mûrissement de 15 minutes. Après ce temps, on introduit à nouveau la solution aqueuse d'acide sulfurique à un débit de 12 ml par minute et cela pendant 37 min. Après cette période, c'est-à-dire 89 min 30 sec après le début de la réaction (89 min 30 sec = 37 min 30 sec + 15 min + 37 min), on procède à l'introduction simultanée, d'une part de la solution d'acide à 366 gl en $H_2SO_4$ à un débit de 5,9 ml par minute, d'autre part d'une solution aqueuse fraîchement préparée de silicate de sodium de rapport pondéral $SiO_2/Na_2O$ = 3,37 contenant 55 g par litre de $SiO_2$, solution introduite à un débit de 82 ml par minute.

Cette introduction simultanée d'acide et de solution de silicate a lieu pendant 40 minutes, le pH du milieu réactionnel est de 7,5 $\pm$ 0,2 à 90°C.

Après ces 40 minutes d'addition simultanée d'acide et de silicate, on arrête l'arrivée de silicate et on maintient celle d'acide. Le pH de la bouillie de silice formée est ainsi amené à 3,5 en 10 minutes. La bouillie de silice obtenue est ensuite filtrée. Le gâteau humide est lavé pour éliminer le sulfate de sodium formé dans la précipitation puis séché. Les caractéristiques physico-chimiques de la silice sont les suivantes:

- Surface C.T.A.B.               200 $m^2/g$
- Surface B.E.T.                  200 $m^2/g$
- Prise d'huile D.B.P.         466 $cm^3/100$ g
- Volume spécifique (Vo)    5,14 $cm^3/g$
- pH à 5 % dans l'eau       6,3

## Exemples 2 à 5

Dans ces exemples, on se place dans des conditions semblables sauf que l'on ajoute un électrolyte à la 20ème minute. Ceci provoque une apparition plus rapide du gel.

A l'exemple 2, on ajoute 0,7 l d'une solution aqueuse de $Na_2SO_4$ à 350 g/l.

A l'exemple 3, on ajoute 1,26 l d'une solution aqueuse de $Na_2SO_4$ à 350 g/l.

A l'exemple 4, on ajoute 1,80 l d'une solution aqueuse de $Na_2SO_4$ à 350 g/l.

A l'exemple 5, on ajoute 2,60 l d'une solution aqueuse de $Na_2SO_4$ à 350 g/l.

On observe (voir tableau général) que, pour les exemples 2 à 5, il y a diminution de la surface spécifique mais augmentation du rapport DBP/CTAB jusqu'à une valeur élevee.

## Exemple 6

On procède comme à l'exemple 1 mais on ajoute 0,85 l de la même solution de $Na_2SO_4$ à la 42ème minute.

La valeur de la surface spécifique est maintenue, la valeur de la prise d'huile augmente et le rapport se situe à un niveau élevée pour les surfaces et prise d'huile en question.

Selon une variante, on additionne 1,34 l de la même solution de sulfate à la 75ème minute, au lieu de la 42ème, c'est-à-dire après la reprise d'addition d'acide.

On retrouve les mêmes résultats.

5

**Exemple 7**

Cet exemple est comparable à l'exemple 6, mais avec les modifications suivantes:

- on utilise un silicate de rapport pondéral: 3,25
- on arrête l'alimentation d'acide à la 33ème minute
- à la 75ème minute, on introduit 1,34 l d'une solution aqueuse de $Na_2SO_4$ à 350 g/l.

Les valeurs de CTAB, prise d'huile et rapport CTAB/prise d'huile vérifient les résultats de l'exemple 6.

**Exemple 8**

Cet exemple correspond à un essai à l'échelle pilote avec un pied de cuve comprenant:

- 112,5 l d'eau permutée
- 35 kg de silicate de rapport pondéral égal à 3,35 et contenant 370 g/l de $SiO_2$

Les autres conditions de marche (arrêt, mûrissement) restent les mêmes sauf la température de départ qui est de 75°C, celle de l'addition qui est de 85°C et un ajout de 4 Kg de sel à la 89ème minute.

On remarque que la prise d'huile reste élevée malgré une valeur de la surface CTAB elle-même importante.

**Exemple 9**

Dans un réacteur de 20 litres décrit à l'exemple 1, on introduit:

- 10 litres d'eau distillée
- 1,6 litre de silicate de sodium aqueux de rapport pondéral Rp = $SiO_2/Na_2O$ égal à 3,37 contenant 370 g de $SiO_2$ par litre
- 1,9 litre d'eau contenant 151 g de $Na_2SO_4$ dissous

Le mélange obtenu, maintenu sous agitation, est porté à 90°C en 30 minutes environ. Cette température est maintenue constante à 1°C près tout au long de l'opération de précipitation de la silice:

- on ajoute de l'acide sulfurique à 30 % jusqu'à la formation du gel à la 34ème minute,
- on reprend l'addition d'acide à la 49ème minute et on réalise une addition simultanée d'acide et de silicate entre les 109ème et 149ème minute à pH constant = 7,5 puis on continue l'acidification jusqu'à pH = 3,5.

On procède à la filtration, au lavage et au séchage selon l'exemple 1.

**Exemple 10**

On introduit dans le réacteur sous agitation et à température ambiante:

- 10 litres d'eau permutée
- 1,6 litre de silicate de sodium aqueux de Rp = 3,37 contenant 370 g/l de $SiO_2$
- 151 g de $Na_2SO_4$ en solution dans 1,9 litres d'eau.

Le mélange obtenu est porté sous agitation à 90°C. On ajoute de l'acide sulfurique jusqu'à formation du gel à la 28ème minute.

On reprend l'addition d'acide à la 42ème minute.

On réalise une addition simultanée entre les 89ème et 129ème minutes à pH = 7,5, puis on continue l'acidification jusqu'à pH égal à 3,5.

La température est maintenue constante à 1°C tout au long de l'opération.

Afin de mettre en évidence l'amélioration apportée par cette silice dans le caoutchouc, on réalise un essai comparatif avec une silice obtenue, de surface BET et CTAB égales à 175 m²/g, de prise d'huile égale à 340 cm³/100 g.

On met en oeuvre la formule suivante en parties en poids:

- Copolymères butadiène Styrène (SBR 1502)         100
- Oxyde de zinc         4,00

- Acide stéarique 1,50
- N-isopropyl-N-phényl-p-phénylène diamide (antioxygène PERMANAX® IPPD) 1,50
- N-(diméthyl 1-3 butyl N'-phényl-p-phénylène diamine (antioxygène PERMANAX® 6PPD) 1,50
- Silice 40
- Polyéthylène glycol (PEG 4000) 2
- N-cyclohexyl-2-Benzothiazol sulfenamide (Vulcafor® CBS) 2
- Soufre 2,50
- γ-mercapto propyldiméthoxysilane (A 189) 0,4

**Mise en oeuvre**

Banbury:
- Silice (90 %) + ZnO Antioxygène + Acide Stéarique + PEG
- Huile + Silice (10 %) + additif (s'il y a lieu)
- Fin du malaxage 120°C
- Calendrage sur malaxeur ouvert

Malaxeur ouvert:
- Mélange + Soufre + Accélérateur
- Malaxage
- Passage au fin
- Tirage en feuille

**Resultats**

Résistance à l'abrasion selon DIN 53316
- Silice témoin de même surface spécifique        102,8 mm$^3$
- Silice selon l'invention                        94,8 mm$^3$

On observe donc une amélioration significative de la résistance à l'abrasion.

**Exemple 11**

Dans le réacteur décrit à l'exemple 1, on introduit sous agitation:

- 8 litres d'eau distillée
- 1,6 litre de silicate de rapport pondéral $SiO_2/Na_2O$ = 3,37 $SiO_2$ = 370 g/l
- 3,88 litres d'eau contenant 339 g de $Na_2SO_4$ à l'état dissous

Le mélange obtenu est porté sous agitation à 70°C ± 1°C en 20 minutes environ. On introduit au sein de ce mélange une solution aqueuse d'acide sulfurique à 366 g/l à raison de 9,8 ml par minute. Après 28 minutes, on note l'apparition du gel de silice et on arrête l'introduction d'acide et on procède à un mûrissement de 15 minutes, le mélange réactionnel étant maintenu agité (350 t/min). Après ce temps, on introduit à nouveau la solution aqueuse d'acide sulfurique [$H_2SO_4$] = 366 g/l à un débit de 10,2 ml/minute et cela pendant 45 minutes. La montée de température a lieu à la 75ème minute, peut avant la post-addition, la température atteignant 78°C au début de la post-addition et 83°C par la suite. 88 minutes après le début de la réaction (88 minutes = 28 + 15 + 45 minutes), on procède à l'introduction simultanée d'une part de la solution aqueuse d'acide sulfurique à 366 g/l à un débit de 5,1 ml par minute, d'autre part d'une solution aqueuse de silicate de sodium fraichement préparée (rapport pondéral $SiO_2/Na_2O$ = 3,37), contenant 45 g de $SiO_2$ par litre, solution introduite à un débit de 82 ml par minute. Cette introduction simultanée d'acide et de silicate est réalisée pendant 40 minutes, le pH du milieu réactionnel est maintenu à 7,5 ± 0,2 à 83°C.

On arrête ensuite l'arrivée de silicate et on maintient l'arrivée d'acide, de façon à amener le pH à 3,5 en dix minutes.

Après filtration, lavage et séchage, on obtient une silice qui présente:

- une surface spécifique CTAB = 200 m$^2$/g
- une surface spécifique BET = 200 m$^2$/g

**Exemples 12 et 13**

Ces exemples décrivent des modes selon lesquels l'addition du sel est effectuée en deux temps:

a) dans la solution aqueuse de silicate de sodium formant le pied de cuve
b) au moment du gel (ex. 12) ou après le gel (ex. 13)

On procède comme à l'exemple 11, avec les modifications suivantes:

- on met en oeuvre un silicate de rapport pondéral Rp = 3,25 (au lieu de 3,37)
- on introduit 1,34 l d'une solution aqueuse de $Na_2SO_4$ à 350 g/l
    - au gel (ex. 12)
    - a la 75ème minutes (ex. 13)

Les résultats obtenus sont à comparer à ceux des exemples 6, 7, 8 et 11 notamment.
On observe une amélioration du couple CTAB/DEP à surface spécifique comparable.

**Exemple 14**

Dans le réacteur décrit à l'exemple 1, on introduit sous agitation:

- 10 l d'eau distillée
- 1,6 litre de silicate de sodium aqueux de rapport pondéral $SiO_2/Na_2O$ = 3,37 et contenant 370 g de $SiO_2$ par litre
- 1,88 litre de solution aqueuse contenant 151 g de $Na_2SO_4$.

Le mélange ainsi obtenu est porté sous agitation à 70°C $\pm$ 1°C en 20 minutes environ. On procède ensuite à la réaction de précipitation.

On introduit, au sein du mélange, à l'aide d'une pompe doseuse, une solution aqueuse d'acide sulfurique contenant 366 g par litre de $H_2SO_4$. Cette introduction est réalisée à raison d'un débit de 10 ml par minute.

42 minutes après le début de l'introduction de l'acide, on note la parution du gel; on arrête alors l'introduction de l'acide et on procède à un mûrissement de 15 minutes sous agitation. On introduit à nouveau l'acide sulfurique aqueux, à la 57ème minute, a un débit de 10 ml par minute et cela pendant 31 minutes.

A partir de la 88ème minute, on procède à l'introduction simultanée, d'une part de la solution d'acide à 366 g de $H_2SO_4$ par litre à un débit de 4,9 ml par minute, d'autre part d'une solution aqueuse de silicate de sodium, de rapport pondéral $SiO_2/Na_2O$ = 3,37 contenant 45 g de $SiO_2$ par litre, solution introduite à un débit de 82 ml par minute. Cette introduction simultanée d'acide et de silicate de sodium aqueux a lieu pendant 40 minutes.

La température de réaction est fixée à 70°C $\pm$ 1°C au début de la réaction jusqu'à la 75ème minute. A la 75ème minute, on élève la température, par chauffage. La température du milieu réactionnel est de 78°C à la 88ème minute, c'est-à-dire au début de l'addition simultanée d'acide et de silicate de sodium aqueux et elle est maintenue par la suite à 83°C $\pm$ 1°C.

Après les 40 minutes d'addition simultanée, on arrête l'introduction de silicate et on poursuit l'introduction d'acide sulfurique de façon à amener le pH à 3,5 en 10 minutes environ.

La suspension de silice obtenue est filtrée. Le gâteau de silice séparé sur le filtre est lavé à l'eau.
Cette bouillie est alors séchée dans un atomiseur selon l'exemple 1.
La silice présente:

- une surface spécifique CTAB égale à 320 m²/g
- une surface spécifique BET égale à 310 m²/g.

**Exemple 15**

On procède comme indiqué à l'exemple 1 mais avec la différence que l'on introduit, à la 20ème minute, 0,5 l de solution aqueuse contenant 8,5 g d'acétate de calcium. Le gel se manifeste à la 34ème minute au lieu de 37 minutes 30 secondes pour l'exemple 1. On effectue alors un mûrissement de 15 minutes sous agitation et on réintroduit l'acide sulfurique à 366 g/l à la 49ème minute, au débit de 12 ml par minute et cela jusqu'à la 89ème minute. On procède alors à l'introduction simultanée d'acide sulfurique $H_2SO_4$ = 366 g/l et de silicate de sodium aqueux (rapport pondéral $SiO_2/Na_2O$ égal à 3,37 et contenant 55 g de $SiO_2$ par litre).

L'acide est introduit à raison de 6 ml par minute et le silicate à raison de 81,5 ml par minute. L'introduction simultanée est réalisée pendant 40 minutes, la température étant maintenue depuis le début de la réaction à 90°C $\pm$ 1°C.

On arrête ensuite l'introduction de silicate et on poursuit, pendant 10 minutes environ, l'introduction d'acide de façon à atteindre un pH égal à 3,5.

La bouillie de silice obtenue est alors filtrée. Le gâteau de silice séparé sur le filtre est lavé à l'eau. Cette bouillie est alors séchée dans un atomiseur selon l'exemple 1.

La silice présente une surface spécifique CTAB égale à 200 m$^2$/g et une surface spécifique BET égale à 200 m$^2$/g.

**Exemple 16**

Dans le réacteur décrit à l'exemple 1, on introduit sous agitation:

10,47 litres d'eau distillée
- 2 litres de silicate de sodium aqueux de rapport pondéral SiO$_2$/Na$_2$O = 3,25 et de concentration en SiO$_2$ égale à 370 g/l,
- 1 litre d'eau contenant 245 g de Na$_2$SO$_4$ l'état dissous

Le mélange obtenu est porté sous agitation à 90°C $\pm$ 1°C en 30 minutes environ. On introduit au sein de ce mélange une solution aqueuse d'acide sulfurique à 366 g/l à raison de 24,7 ml par minute. Après 12 minutes, on note l'apparition du gel de silice et on arrête l'introduction d'acide et on procède à un mûrissement de 15 minutes, le mélange réactionnel étant maintenu agité (350 tr/min). Après ce temps, on introduit à nouveau la solution aqueuse d'acide sulfurique H$_2$SO$_4$ = 366 g/l à un débit de 24,9 ml/minute et cela pendant 25 minutes. 52 minutes après le début de la réaction (52 minutes = 12 + 15 + 25 minutes), on procède à l'introduction simultanée, d'une part de la solution aqueuse d'acide sulfurique à 366 g/l à un débit de 6,4 ml par minute, d'autre part d'une solution aqueuse de silicate de sodium fraîchement préparée (rapport pondéral SiO$_2$/Na$_2$O = 3,25), contenant 55 g de SiO$_2$ par litre, solution introduite à un débit de 81 ml par minute. Cette introduction simultanée d'acide et de silicate est réalisée pendant 40 minutes, le pH du milieu réactionnel est maintenu à 7,5 $\pm$ 0,2 à 90°C.

On arrête ensuite l'arrivée du silicate et on maintient l'arrivée d'acide, de façon à amener le pH à 3,5 en 15 minutes.

Après filtration, lavage et séchage par le même atomiseur, on obtient une silice qui présente les caractéristiques suivantes:

- une surface spécifique CTAB 123 m$^2$/g
- une surface spécifique BET = 122 m$^2$/g

**Exemple 17**

On dispose d'un réacteur à volume égal à 20 l tel qu'il est décrit à l'exemple 1.
Dans ce réacteur, on introduit:

- 10,9 litres d'eau contenant 135 mg de Ca (OH)$_2$
- 2,28 litres de silicate de sodium aqueux de rapport pondéral SiO$_2$/Na$_2$O = 3,37 contenant 318 g de SiO$_2$ par litre.

On agite le mélange obtenu et on porte la température à 90°C $\pm$ 1°C. On procède ensuite à la réaction de précipitation. On introduit au sein du mélange agité (vitesse d'agitation de la turbine 350 tours par minute), une solution aqueuse d'acide sulfurique contenant 366 g de H$_2$SO$_4$ par litre. Cette introduction est réalisée à raison d'un débit de 12 ml par minute. Après 32 minutes de réaction, on note la parution du gel. On arrête alors l'introduction d'acide et on procède à un mûrissement de 15 minutes. Après ce temps, on introduit à nouveau la solution aqueuse d'acide sulfurique à un débit de 12 ml par minute et cela pendant 34 minutes. Après cette période, soit 32 + 15 + 34 = 81 minutes après le début de la réaction, le pH de la suspension est égal à 7,8 $\pm$ 0,1 à 90°C, on procède à l'addition simultanée au sein du mélange réactionnel, en deux points nettement distincts, d'une solution aqueuse d'acide sulfurique H$_2$SO$_4$ = 366 g/l et d'une solution aqueuse de silicate de sodium fraîchement préparée, de rapport pondéral SiO$_2$/Na$_2$O = 3,37, contenant 55 g de SiO$_2$ par litre.

Cette addition simultanée est réalisée en 40 minutes à 90°C de la façon suivante:
on introduit la solution de silicate de sodium aqueux à un débit égal à 82 ml par minute, on introduit l'acide sulfurique aqueux à un débit décroissant dans le temps, de façon à avoir une décroissance continue du pH de la valeur de 7,8 $\pm$ 0,1 à la valeur de 3,5 $\pm$ 0,1.

Après filtration de la suspension de silice obtenue, lavage par l'eau distillée et séchage par atomiseur selon l'exemple 1, on obtient une poudre de silice présentant les caractéristiques suivantes:

- surface CTAB = 270 m$^2$/g
- surface BET 270 m$^2$/g
- prise d'huile DBP = 420 ml pour 100 g de silice
- pH = 5,0


**Exemple 18**

Dans un réacteur de 20 litres décrit à l'exemple 1, on introduit:

- 10,83 litres d'eau distillée
- 2,64 litres de silicate de sodium aqueux de rapport pondéral SiO$_2$/Na$_2$O = 3,7 contenant 282 g de SiO$_2$ par litre

Le mélange obtenu est porté sous agitation à 90°C ± 1°C en 30 minutes environ. On introduit au sein de ce mélange, à l'aide d'une pompe doseuse, une solution aqueuse d'acide sulfurique contenant 366 g de H$_2$SO$_4$ par litre. Cette introduction est réalisée à raison d'un débit moyen de 11 ml par minute et cela pendant 41 minutes. A cet instant, on note la parution du gel; on arrête l'introduction d'acide et on procède à un mûrissement de 15 minutes. A la 44ème minute, on introduit 0,9 l d'une solution aqueuse de Na$_2$SO$_4$ contenant 350 g de Na$_2$SO$_4$ par litre. A la 56ème minute, on introduit à nouveau la solution aqueuse d'acide sulfurique à un débit de 11 ml par minutes et cela pendant 32 minutes. Après cette période, c'est-à-dire 88 minutes après le début de la réaction (88 minutes = 41 + 15 + 32 minutes), on procède à l'introduction simultanée au sein du milieu réactionnel, d'une part de la solution aqueuse d'acide sulfurique à 366 g par litre en H$_2$SO$_4$, à un débit de 11 ml par minute, d'autre part d'une solution aqueuse fraîchement préparée de silicate de sodium de rapport pondéral SiO$_2$/Na$_2$O = 3,7 contenant 55 g de SiO$_2$ par litre, solution introduite à un débit de 80 ml par minute.

Cette introduction simultanée d'acide et de silicate de sodium aqueux est réalisée pendant 40 minutes, la températurée étant maintenue à 90°C ± 1°C.

Après ces 40 minutes d'addition simultanée, on arrête l'introduction de la solution aqueuse de silicate de sodium et on maintient celle de l'acide. Le pH de la bouillie de silice formée est ainsi amené à la valeur de 3,5 en 10 minutes.

La bouillie de silice obtenue est ensuite filtrée. Le gâteau humide résultant est lavé à l'eau distillé pour éliminer le sulfate de sodium formé pendant la précipitation. Le gâteau lavé est ensuite séché comme à l'exemple 1.

Les caractéristiques physico-chimiques de la silice sont les suivantes:

- surface CTAB = 255 m$^2$/g
- surface BET = 260 m$^2$/g
- prise d'huile DBP = 410 ml pour 100 g de silice
- pH = 4,5


**Exemple 19**

On réalise la précipitation comme décrit à l'exemple 18 avec les différences suivantes:

on remplace la phase d'introduction simultanée d'acide sulfurique aqueux et de silicate de sodium aqueux par une phase réactionnelle où l'on introduit uniquement l'acide sulfurique aqueux [H$_2$SO$_4$] = 366 g/l. Cette introduction a lieu pendant 30 minutes, la suspension réactionnelle étant maintenue sous agitation à 90°C ± 1°C.

Le débit de l'acide est réglé de façon décroissante dans le temps, de façon à avoir une décroissance continue du pH de la valeur 7,8 ± 0,1 à la valeur 3,5 ± 0,1.

Après filtration, lavage et séchage avec le même atomiseur que précédemment, la silice obtenue présente les caractéristiques suivantes:

- surface CTAB = 300 m$^2$/g
- surface BET = 310 m$^2$/g
- prise d'huile DBP = 410 ml pour 100 g de silice
- pH = 4,8

**Exemple 20**

Dans un réacteur de volume égal à 20 litres décrit à l'exemple 1, on introduit:

- 8 litres d'eau permutée
- 2,15 litres de silicate de sodium aqueux de rapport pondéral $SiO_2/Na_2O$ = 3,35 contenant 370 g de $SiO_2$ par litre
- 3,32 litres de solution aqueuse contenant 339 g de $Na_2SO_4$.

Le mélange obtenu est agité (vitesse de la turbine: 350 tours par minute) et porté à 90°C en 30 minutes environ. On introduit ensuite au sein de ce mélange, à l'aide d'une pompe doseuse, une solution aqueuse d'acide sulfurique contenant 366 g de $H_2SO_4$ par litre. Cette introduction est réalisée à raison d'un débit moyen de 13,1 ml par minute et cela pendant 18 minutes. A cet instant, on note la parution du gel on arrête l'introduction d'acide et on procède à un mûrissement de 15 minutes. Après ce temps, c'est-à-dire à la 33ème minute à partir du début de la réaction, on introduit à nouveau la solution aqueuse d'acide sulfurique à un débit de 12,8 ml par minute et cela pendant 56 minutes. Après cette période, c'est-à-dire 89 minutes après le début de la réaction (89 minutes = 18 + 15 + 56 minutes), on procède à l'introduction simultanée au sein du milieu réactionnel, d'une part de la solution d'acide sulfurique à 366 g de $H_2SO_4$ par litre, à un débit de 6,9 ml par minute, d'autre part d'une solution aqueuse fraîchement préparée de silicate de sodium de rapport pondéral $SiO_2/Na_2O$ = 3,35 contenant 59 g de $SiO_2$ par litre, solution introduite à un débit de 82 ml par minute.

Cette introduction simultanée d'acide et de silicate de sodium aqueux a lieu pendant 40 minutes, la suspension réactionnelle étant maintenue sous agitation (vitesse de rotation de la turbine: 350 tours par minute) à 90°C ± 1°C.

Après ces 40 minutes d'addition simultanée, on arrête l'introduction de la solution aqueuse de silicate de sodium et on maintient celle de l'acide. Le pH de la bouillie de silice formée dans le réacteur est ainsi amené à la valeur de 3,5 en 10 minutes.

La bouillie de silice obtenue est ensuite filtrée. Le gâteau recueilli sur le filtre est lavé puis séché au moyen du même atomiseur.

La poudre de silice obtenue présente les caractéristiques suivantes:

- surface spécifique CTAB = 55 m²/g
- surface spécifique BET = 60 m²/g
- prise d'huile DBP = 290 ml pour 100 g de $SiO_2$
- pH = 5,9

**Exemple 21**

Dans un récipient en acier inoxydable d'un volume de 20 litres muni d'un système d'agitation (turbine Lightnin à 6 pales) et de 4 contrepales à 90°, munies également d'un système de chauffage par double enveloppe, on introduit sous agitation et à température ambiante: .

- 10,47 litres d'eau distillée
- 2 litres de silicate de sodium aqueux de rapport pondéral $SiO_2/Na_2O$ égal à 3,37 et contenant 370 g par litre de $SiO_2$
- 245 g de $Na_2SO_4$ en solution dans un litre d'eau distillée

Le mélange ainsi obtenu est porté, sous agitation, à 90°C ± 1°C en 30 minutes environ. On procède ensuite à la réaction de précipitation de la silice, la température étant maintenue à 90°C ± 1°C. Pour cela, on introduit au sein du mélange, à l'aide d'une pompe, une solution aqueuse d'acide sulfurique contenant $366^{-1}$ g de $H_2SO_4$ par litre. Cette introduction est réalisée à raison d'un débit de 12,1 ml de solution acide. A cet instant, soit après 22 minutes de réaction, on note la parution du gel; on arrête l'introduction de l'acide et on procède à un mûrissement de 15 minutes. Après ce temps, on introduit à nouveau la solution aqueuse d'acide sulfurique à 366 gl en $H_2SO_4$, à un débit de 12 ml par minute et cela pendant 53 minutes et toujours en maintenant une température de 90°C ± 1°C. Après cette période, c'est-à-dire 90 minutes (90 = 22 + 15 + 53) après le début de la réaction, on procède à l'introduction simultanée, au sein du milieu réactionnel en deux points distincts, d'une part de la solution d'acide à 366 gl$^{-1}$ en $H_2SO_4$, à un débit de 6,8 ml par minute, d'autre part d'une solution de silicate de sodium de rapport pondéral $SiO_2/Na_2O$ = 3,37 contenant 55 g par litre de $SiO_2$, solution introduite à un débit de 84 ml par minute.

Cette introduction simultanée d'acide et de solution de silicate a lieu pendant 40 minutes, le pH du milieu réactionnel est de 7,5 ± 0,2 à 90°C.

Après ces 40 minutes d'addition simultanée d'acide et de silicate, on arrête l'arrivée de silicate et on maintient l'arrivée d'acide 366 gl$^{-1}$ en $H_2SO_4$ à raison de 6,8 ml par minute; Le pH de la bouillie de silice formée $[SiO_2]$ 50 gl$^{-1}$ est ainsi amené à 3,5 en 10 minutes.

11

La bouillie de silice obtenue est filtrée. Le gâteau est lavé à l'eau distillée (ou éventuellement par une eau moins pure). Le gâteau humide lavé conduit après séchage à une poudre de silice fine présentant les caractéristiques suivantes:

- surface CTAB = 90 m²/g
- surface BET = 88 m²/g
- pH = 7,5
- prise d'huile DBP = 380 ml pour 100 g de silice

**Revendications** pour les Etats Contractants: BE, CH, DE, FR, GB, IT, LI, LU, NL, SE

1. Silice de précipitation présentant une surface BET comprise entre 50 et 350 m²/g, caractérisé par le fait qu'elle présente pour des surfaces spécifiques CTAB croissantes, un rapport du couple indice d'huile DBP/CTAB décroissant lorsque les surfaces CTAB croissent tel que le rapport DBP/CTAB soit compris entre
- 7 et 4 pour un intervalle de CTAB compris entre 50 - 10 m²/g
- 4 et 2,5 pour un intervalle de CTAB compris entre 100 - 200 m²/g la silice présentant pour cet intervalle de CTAB un rapport surface BET/surface CTAB compris entre 1 et 1,2;
- 2,5 et 2 pour un intervalle de CTAB compris entre 200 - 250 m²/g
- 2 et 1,5 pour un intervalle de CTAB compris entre 250 - 300 m²/g
- 1,5 et 1,2 pour un intervalle de CTAB compris entre 300 - 350 m²/g

2. Silice de précipitation selon la revendication 1, caractérisée par le fait qu'elle présente, pour une surface CTAB comprise entre 50 et 100 m²/g et entre 200 et 350 m²/g, un rapport surface BET/Surface CTAB compris entre 1 et 1,2.

3. Procédé d'obtention d'une silice précipitée selon l'une des revendications 1 et 2 qui comprend les étapes suivantes:
a) formation d'un pied de cuve renfermant une partie du silicate total utilisé
b) addition d'un acide jusqu'à l'apparition du gel
c) observation d'un arrêt de l'ajout d'acide et mûrissement du gel
d) addition d'acide
e) post-traitement
f) filtration, lavage et séchage de la suspension et récupération du produit obtenu, caractérisé par le fait que:
- le pied de cuve à l'étape (a) renferme au moins 60 % poids du silicate total utilisé.
- à l'étape (b), on règle le couple temps/température de manière à provoquer la gélification entre 10 et 50 minutes.
- on observe un arrêt à la gélification de 5 à 30 minutes
- après arrêt, on reprend l'addition d'acide jusqu'à obtenir un pH au plus égal à 9, puis on effectue un post-traitement, par addition simultanée des réactifs à une valeur de pH compris entre 7 et 9.
- on introduit un électrolyte dans au moins une des étapes (a), (b), (c), (d) et (e).

4. Procédé d'obtention d'une silice précipitée selon l'une des revendications 1 et 2 qui comprend les étapes suivantes:
a) formation d'un pied de cuve renfermant une partie du silicate total utilisé.
b) addition d'un acide jusqu'à l'apparition du gel
c) observation d'un arrêt de l'ajout d'acide et mûrissement du gel
d) addition d'acide
e) post-traitement
f) filtration, lavage et séchage de la suspension et récupération du produit obtenu, caractérisé par le fait que:
- le pied de cuve à l'étape (a) renferme de 60 à 100 % en poids de silicate.
- à l'étape (b), on règle le couple temps/température de manière à provoquer la gélification entre 10 et 50 minutes.
- on observe un arrêt à la gélification de 5 à 30 minutes.
- après arrêt, on reprend l'addition d'acide jusqu'à obtenir un pH au plus égal à 9, puis on effectue un post-traitement par traitement acide à pH décroissant,
- on introduit un électrolyte dans au moins une des étapes (a), (b), (c), (d) et (e).

5. Procédé selon l'une des revendications 3 et 4, caractérisé par le fait que l'électrolyte est constitué par un sel du groupe des métaux alcalins et alcalino-terreux.

6. Procédé selon l'une des revendications 3 à 5, caractérisé par le fait que l'électrolyte est amené en une fois.

7. Procédé selon l'une des revendications 3 à 5, caractérisé par le fait que l'électrolyte est amené en plusieurs fois.

8. Procédé selon l'une des revendications 3 à 7, caractérisé par le fait que l'électrolyte est amené avant l'apparition du gel.

9. Procédé selon l'une des revendications 3 à 7, caractérisé par le fait que l'électrolyte est amené à l'apparition du gel.

10. Procédé selon l'une des revendications 3 à 7, caractérisé par le fait que l'électrolyte est amené après

EP 0 157 703 B1

l'apparition du gel.

11. Procédé selon l'une des revendications 3 à 10, caractérisé par le fait que le séchage est effectué en formant un écoulement puits-tourbillon symétrique, avec un gaz chaud, à grande quantité de mouvement et introduction de la suspension de silice selon l'axe de rotation de cet écoulement dans la zone de dépression relative dudit écoulement, la quantité de mouvement de l'écoulement puits-tourbillon symétrique par rapport au flux axial de la suspension étant suffisante pour provoquer la rupture du flux axial, sa dispersion et sa prise en charge.

12. Application des silices selon l'une des revendications 1 et 2, au renforcement des élastomères.

13. Application des silices selon l'une des revendications 1 et 2, comme épaississants.

**Revendications** pour l'Etat Contractant: AT

1. Procédé d'obtention d'une silice précipitée qui comprend les étapes suivantes:
a) formation d'un pied de cuve renfermant une partie du silicate total utilisé
b) addition d'un acide jusqu'à l'apparition du gel
c) observation d'un arrêt de l'ajout d'acide et mûrissement du gel
d) addition d'acide
e) post-traitement
f) filtration, lavage et séchage de la suspension et récupération du produit obtenu, caractérisé par le fait que:
- le pied de cuve à l'étape (a) renferme au moins 60 % en poids de silicate total utilisé;
- à l'étape (b), on règle le couple temps/température de manière à provoquer la gélification entre 10 et 50 minutes;
- on observe un arrêt à la gélification de 5 à 30 minutes
- après arrêt, on reprend l'addition d'acide jusqu'à obtenir un pH au plus égal à 9, puis on effectue un post-traitement, par addition simultanée des réactifs à une valeur de pH compris entre 7 et 9;
- on introduit un électrolyte dans au moins une des étapes (a), (b), (c), (d) et (e).

2. Procédé d'obtention d'une silice précipitée qui comprend les étapes suivantes:
a) formation d'un pied de cuve renfermant une partie du silicate total utilisé
b) addition d'un acide jusqu'à l'apparition du gel
c) observation d'un arrêt de l'ajout d'acide et mûrissement du gel
d) addition d'acide
e) post-traitement
f) filtration, lavage et séchage de la suspension et récupération du produit obtenu, caractérisé par le fait que:
- le pied de cuve à l'étape (a) renferme de 60 à 100 % en poids de silicate;
- à l'étape (b), on règle le couple temps/température de manière à provoquer la gélification entre 10 et 50 minutes;
- on observe un arrêt à la gélification de 5 à 30 minutes;
- après arrêt, on reprend l'addition d'acide jusqu'à obtenir un pH au plus égal à 9, puis on effectue un post-traitement par traitement acide à pH décroissant,
- on introduit un électrolyte dans au moins une des étapes (a), (b), (c), (d) et (e).

3. Procédé selon la revendication 1 ou 2 caractérisé par le fait que l'électrolyte est constitué par un sel du groupe des métaux alcalins et alcalino-terreux.

4. Procédé selon l'une des revendications 1 à 3, caractérisé par le fait que l'électrolyte est amené en une fois.

5. Procédé selon l'une des revendications 1 à 3, caractérisé par le fait que l'électrolyte est amené en plusieurs fois.

6. Procédé selon l'une des revendications 1 à 5, caractérisé par le fait que l'électrolyte est amené avant l'apparition du gel.

7. Procédé selon l'une des revendications 1 à 5, caractérisé par le fait que l'électrolyte est amené à l'apparition du gel.

8. Procédé selon l'une des revendications 1 à 5, caractérisé par le fait que l'électrolyte es't amené après l'apparition du gel.

9. Procédé selon l'une des revendications 1 à 8, caractérisé par le fait que le séchage est effectué en formant un écoulement puits-tourbillon symétrique, avec un gaz chaud, à grande quantité de mouvement et introduction de la suspension de silice selon l'axe de rotation de cet écoulement dans la zone de dépression relative dudit écoulement, la quantité de mouvement de l'écoulement puits-tourbillon symétrique par rapport au flux axial de la suspension étant suffisante pour provoquer la rupture du flux axial, sa dispersion et sa prise en charge.

10. Application des silices obtenues par le procédé selon l'une des revendications précédentes, au renforcement des élastomères.

11. Application des silices obtenues par le procédé selon l'une des revendications précédentes, comme épaississants.

13

# EP 0 157 703 B1

**Patentansprüche** für die Vertragsstaaten: BE, CH, DE, FR, GB, IT, LI, LU, NL, SE

1. Gefälltes Siliciumdioxid mit einer BET-Oberfläche zwischen 50 und 350 m$^2$/g, dadurch gekennzeichnet, daß es bei wachsenden spezifischen CTAB-Oberflächen ein abnehmendes Verhältnis des Paars Öl-Index DBP/CTAB aufweist, sobald die CTAB-Oberflächen wachsen, so daß das Verhältnis DBP/CTAB zwischen
- 7 und 4 liegt für ein CTAB-Intervall zwischen 50 und 100 m$^2$/g)
- zwischen 4 und 2,5 für ein CTAB-Intervall zwischen 100 und 200 m$^2$/g, wobei das Siliciumdioxid in diesem CTAB-Intervall ein Verhältnis BET-Oberfläche/CTAB-Oberfläche zwischen 1 und 1,2 aufweist,
- zwischen 2,5 und 2 liegt für ein CTAB-Intervall zwischen 200 und 250 m$^2$/g),
- zwischen 2 und 1,5 liegt für ein CTAB-Intervall zwischen 250 und 300 m$^2$/g),
- zwischen 1,5 und 1,2 liegt für ein CTAB-Intervall zwischen 300 und 350 m$^2$/g.

2. Gefälltes Siliciumdioxid gemäß Anspruch 1, dadurch gekennzeichnet, daß es bei einer CTAB-Oberfläche zwischen 50 und 100 m$^2$/g und zwischen 200 und 350 m$^2$/g ein Verhältnis BET-Oberfläche/CTAB-Oberfläche zwischen 1 und 1,2 aufweist.

3. Verfahren zur Herstellung eines gefällten Siliciumdioxids gemäß einem der Ansprüche 1 und 2, umfassend die nachfolgenden Schritte:
   a) Bildung eines Bodensatzes enthaltend einen Teil des gesamten eingesetzten Silikats,
   b) Zugabe einer Säure bis zur Gelbildung,
   c) Einhalten einer Unterbrechung der Zugabe der Säure und Reifung des Gels,
   d) Zugabe von Säure,
   e) Nachbehandlung,
   f) Filtration, Waschung und Trocknung der Suspension und Gewinnung des erhaltenen Produkts, dadurch gekennzeichnet, daß:
   - der Bodensatz in Schritt (a) wenigstens 60 Gew.-% des gesamten eingesetzten Silikats enthält,
   - man in Schritt (b) das Wertepaar Zeit/Temperatur in solcher Weise einstellt, daß eine Gelbildung zwischen 10 und 50 Minuten hervorgerufen wird,
   - man eine Unterbrechung der Gelbildung von 5 bis 30 Minuten einhält,
   - man nach der Unterbrechung die Zugabe der Säure wieder aufnimmt, bis man einen pH von höchstens gleich 9 erhält und dann eine Nachbehandlung durch gleichzeitige Zugabe der Reaktanden bei einem pH-Wert zwischen 7 und 9 vornimmt
   - man einen Elektrolyten in wenigstens einem der Schritte (a) (b) (c) (d) und (e) zuführt.

4. Verfahren zur Herstellung eines gefällten Siliciumdioxids gemäß einem der Ansprüche 1 und 2, das die nachfolgenden Schritte umfaßt:
   a) Bildung eines Bodensatzes enthaltend einen Teil des gesamten eingesetzten Silikats,
   b) Zugabe einer Säure bis zur Gelbildung,
   c) Einhalten einer Unterbrechung der Zugabe der Säure und Reifung des Gels,
   d) Zugabe von Säure,
   e) Nachbehandlung,
   f) Filtration, Waschung und Trocknung der Suspension und Gewinnung des erhaltenen Produkts, dadurch gekennzeichnet daß:
   - der Bodensatz in Schritt (a) 60 bis 100 Gew.-% Silikat enthält,
   - man im Schritt (b) das Wertepaar Zeit/Temperatur so einstellt, daß eine Gelbildung zwischen 10 und 50 Minuten hervorgerufen wird,
   - man eine Unterbrechung der Gelbildung von 5 bis 30 Minuten einhält,
   - man nach der Unterbrechung die Zugabe an Säure wieder aufnimmt, bis man einen pH von höchstens 9 erhält, dann eine Nachbehandlung durch saure Behandlung mit abnehmendem pH vornimmt,
   - man einen Elektrolyten in wenigstens einem der Schritte (a) (b) (c) (d) und (e) zugibt.

5. Verfahren nach einem der Ansprüche 3 und 4, dadurch gekennzeichnet, daß der Elektrolyt aus einem Salz der Gruppe der Alkalimetalle und 1 Erdalkalimetalle besteht.

6. Verfahren nach einem der Ansprüche 3 bis 5, dadurch gekennzeichnet, daß der Elektrolyt auf einmal zugeführt wird.

7. Verfahren nach einem der Ansprüche 3 bis 5, dadurch gekennzeichnet, daß der Elektrolyt in mehreren Schritten zugegeben wird.

8. Verfahren nach einem der Ansprüche 3 bis 7, dadurch gekennzeichnet, daß der Elektrolyt vor der Gelbildung zugegeben wird.

9. Verfahren nach einem der Ansprüche 3 bis 7, dadurch gekennzeichnet, daß der Elektrolyt bei Gelbildung zugegeben wird.

10. Verfahren nach einem der Ansprüche 3 bis 7, dadurch gekennzeichnet, daß der Elektrolyt nach der Gelbildung zugegeben wird.

11. Verfahren nach einem der Ansprüche 3 bis 10, dadurch gekennzeichnet, daß die Trocknung durch Bildung eines symmetrischen wirbelstromförmigen Abflusses mit Hilfe eines heißen Gases mit grosser Triebkraft durchgeführt wird und unter Einführung der Siliciumdioxidsuspension entlang der Rotationsachse dieses Abflusses in dessen Zone relativen Unterdrucks, wobei die Triebkraft des symmetrischen wirbelstromförmigen Abflusses im Verhältnis zum axialen Fluß der Suspension ausreichend ist, um den Abbruch des axialen Flusses, seine Dispersion und seine Mitnahme hervorzurufen.

14

# EP 0 157 703 B1

12. Verwendung von Siliciumdioxiden gemäß einem der Ansprüche 1 und 2 zur Verstärkung von Elastomeren.
13. Verwendung von Siliciumdioxiden gemäß einem der Ansprüche 1 und 2 als Verdickungsmittel.

**Patentansprüche** für den Vertragsstaat: AT

1. Verfahren zur Herstellung eines gefällten Siliciumdioxids umfassend die nachfolgenden Schritte:
a) Bildung eines Bodensatzes enthaltend einen Teil des gesamten eingesetzten Silikats,
b) Zugabe einer Säure bis zur Gelbildung,
c) Einhalten einer Unterbrechung der Zugabe der Säure und Reifung des Gels,
d) Zugabe von Säure,
e) Nachbehandlung,
f) Filtration, Waschung und Trocknung der Suspension und Gewinnung des erhaltenen Produkts, dadurch gekennzeichnet, daß:
- der Bodensatz in Schritt (a) wenigstens 60 Gew.-% des gesamten eingesetzten Silikats enthält,
- man in Schritt (b) das Wertepaar Zeit/Temperatur in solcher Weise einstellt, daß eine Gelbildung zwischen 10 und 50 Minuten hervorgerufen wird,
- man eine Unterbrechung der Gelbildung von 5 bis 30 Minuten einhält,
- man nach der Unterbrechung die Zugabe der Säure wieder aufnimmt, bis man einen pH von höchstens gleich 9 erhält und dann eine Nachbehandlung
durch gleichzeitige Zugabe der Reaktanden bei einem pH-Wert zwischen 7 und 9 vornimmt,
- man einen Elektrolyten in wenigstens einem der Schritte (a), (b), (c), (d) und (e) zuführt.
2. Verfahren zur Herstellung eines gefällten Siliciumdioxids, das die nachfolgenden Schritte umfaßt:
a) Bildung eines Bodensatzes enthaltend einen Teil des gesamten eingesetzten Silikats,
b) Zugabe einer Säure bis zur Gelbildung,
c) Einhalten einer Unterbrechung der Zugabe der Säure und Reifung des Gels,
d) Zugabe von Säure,
e) Nachbehandlung,
f) Filtration, Waschung und Trocknung der Suspension und Gewinnung des erhaltenen Produkts, dadurch gekennzeichnet daß:
- der Bodensatz in Schritt (a) 60 bis 100 Gew.-% Silikat enthält,
- man im Schritt (b) das Wertepaar Zeit/Temperatur so einstellt, daß eine Gelbildung zwischen 10 und 50 Minuten hervorgerufen wird,
- man eine Unterbrechung der Gelbildung von 5 bis 30 Minuten einhält,
- man nach der Unterbrechung die Zugabe an Säure wieder aufnimmt, bis man einen pH von höchstens 9 erhält, dann eine Nachbehandlung durch saure Behandlung mit abnehmendem pH vornimmt,
- man einen Elektrolyten in wenigstens einem der Schritte (a), (b), (c), (d) und (e) zugibt.
3. Verfahren nach Anspruch 1 oder 2, dadurch gekennzeichnet, daß der Elektrolyt aus einem Salz der Gruppe der Alkalimetalle und Erdalkalimetalle besteht.
4. Verfahren nach einem der Ansprüche 1 bis 3, dadurch gekennzeichnet, daß der Elektrolyt auf einmal zugeführt wird.
5. Verfahren nach einem der Ansprüche 1 bis 3, dadurch gekennzeichnet, daß der Elektrolyt in mehreren Schritten zugegeben wird.
6. Verfahren nach einem der Ansprüche 1 bis 5, dadurch gekennzeichnet, daß der Elektrolyt vor der Gelbildung zugegeben wird.
7. Verfahren nach einem der Ansprüche 1 bis 5, dadurch gekennzeichnet, daß der Elektrolyt bei Gelbildung zugegeben wird.
8. Verfahren nach einem der Ansprüche 1 bis 5, dadurch gekennzeichnet, daß der Elektrolyt nach der Gelbildung zugegeben wird.
9. Verfahren nach einem der Ansprüche 1 bis 8, dadurch gekennzeichnet, daß die Trocknung durch Bildung eines symmetrischen wirbelstromförmigen Abflusses mit Hilfe eines heißen Gases mit grosser Triebkraft durchgeführt wird und unter Einführung der Siliciumdioxidsuspension entlang der Rotationsachse dieses Abflusses in dessen Zone relativen Unterdrucks, wobei die Triebkraft des symmetrischen wirbelstromförmigen Abflusses im Verhältnis zum axialen Fluß der Suspension ausreichend ist, um den Abbruch des axialen Flusses, seine Dispersion und seine Mitnahme hervorzurufen.
10. Verwendung der Siliciumdioxide, die in dem Verfahren gemäß einem der vorhergehenden Ansprüche erhalten wurden zur Verstärkung von Elastomeren.
11. Verwendung der Siliciumdioxiden, die in dem Verfahren gemäß einem der vorhergehenden Ansprüche erhalten wurden als Verdickungsmittel.

15

**EP 0 157 703 B1**

1. A precipitation silica having a BET surface area of between 50 and 350 $m^2/g$, characterised in that, for increasing CTAB specific surface areas, it has a ratio in respect of the pairing DBP/CTAB oil index which decreases, when the CTAB surface areas increase, such that the ratio DBP/CTAB is between:
   - 7 and 4 for a CTAB range between 50 - 100 $m^2/g$,
   - 4 and 2.5 for a CTAB range between 100 - 200 $m^2/g$,
   The silica having, for this CTAB range, a ratio in respect of BET surface area/CTAB surface area of between 1 and 1.2t
   - 2.5 and 2 for a CTAB range between 200 - 250 $m^2/g$,
   - 2 and 1.5 for a CTAB range between 250 - 300 $m^2/g$,
   - 1.5 and 1.2 for a CTAB range between 300 - 350 $m^2/g$.

2. A precipitation silica according to Claim 1, characterised in that it has, for a CTAB range between 50 and 100 $m^2/g$ and between 200 and 350 $m^2/g$, a ratio in respect of BET surface area/CTAB surface area of between 1 and 1.2.

3. A process for obtaining a precipitated silica according to one of Claims 1 and 2 which comprises the following steps:
   a) forming a vessel bottoms containing a part of the total silicate used,
   b) adding an acid until the gel appears,
   c) observing a stop in the addition of acid and maturing of the gel,
   d) adding acid,
   e) post-treatment,
   f) filtering, washing and drying the suspension and recovering the product obtained,
   characterised in that:
   - the vessel bottoms in step (a) contains at least 60 % by weight of the total silicate used,
   - in step (b), the time/temperature pairing is regulated so as to cause gelation between 10 and 50 minutes,
   - a stop to gelation is observed from 5 to 30 minutes,
   - after the stop, the addition of acid is resumed to give a pH-value which is at most equal to 9, followed then by a post-treatment, carried out by adding reagents simultaneously with a pH-value of between 7 and 9,
   - an electrolyte is introduced in at least one of steps (a), (b), (c), (d) and (e).

4. A process for obtaining a precipitated silica according to one of Claims 1 and 2, comprising the following steps:
   a) forming a vessel bottoms containing a part of the total silicate used,
   b) adding an acid until the gel appears,
   c) observing a stop in the addition of acid and maturing of the gel,
   d) adding acid,
   e) post-treatment,
   f) filtering, washing and drying the suspension and recovering the product obtained,
   characterised in that:
   - the vessel bottoms in step (a) contains between 60 - 100 % by weight of silicate,
   - in step (b), the time/temperature pairing is regulated so as to cause gelation between 10 and 50 minutes,
   - a stop to gelation is observed from 5 to 30 minutes,
   - after the stop, the addition of acid is resumed to give a pH-value which is at most equal to 9, followed then by a post-treatment, carried out by treatment with acid with a decreasing pH-value,
   - an electrolyte is introduced in at least one of steps (a), (b), (c), (d) and (e).

5. Process according to one of Claims 3 and 4, characterised in that the electrolyte comprises a salt from the group of alkali metal and alkaline earth metal salts.

6. A process according to one of Claims 3 to 5, characterised in that the electrolyte is introduced once.

7. A process according to one of claims 3 to 5, characterised by the fact that the electrolyte is introduced several times.

8. A process according to one of Claims 3 to 7, characterised in that the electrolyte is introduced before the gel appears.

9. A process according to one of claims 3 to 7, characterised in that the electrolyte is introduced at the time when the gel appears.

10. A process according to one of claims 3 to 7, characterised in that the electrolyte is introduced after the gel has appeared.

11. A process according to one of claims 3 to 10, characterised in that the drying operation comprises forming a symmetrical vortex-axial flow configuration, with a hot gas, having a high degree of momentum, and introducing the suspension of silica along the axis of revolution of the flow, in the relative depression area thereof, the momentum of said vortex-axial flow configuration which is symmetrical with respect to the axial flow of the suspension being sufficient to cause the axial flow to be broken up, dispersed and taken over.

12. The use of silicas according to one of Claims 1 and 2, for reinforcing elastomers.

13. The use of silicas according to one of Claims 1 and 2, as thickening agents.

**Claims** for the contracting State: AT

1. A process for obtaining a precipitated silica, comprising the following steps:
a) forming a vessel bottoms containing a part of the total silicate used,
b) adding an acid until the gel appears,
c) observing a stop in the addition of acid and maturing of the gel,
d) adding acid,
e) post-treatment,
f) filtering, washing and drying the suspension and recovering the product obtained,
characterised in that:
- the vessel bottoms in step (a) contains at least 60 % by weight of the total silicate used,
- in step (b), the time/temperature pairing is regulated so as to cause gelation between 10 and 50 minutes.
- a stop to gelation is observed from 5 to 30 minutes,
- after the stop, the addition of acid is resumed to give a pH-value which is at most equal to 9, followed then by a post-treatment, carried out, by adding reagents simultaneously with a pH-value of between 7 and 9.
- an electrolyte is introduced in at least one of steps (a), (b), (c), (d) and (e).

2. A process for obtaining a precipitated silica, comprising the following steps:
a) forming a vessel bottoms containing a part of the total silicate used,
b) adding an acid until the gel appears,
c) observing a stop in the addition of acid and maturing the gel,
d) adding acid,
e) post-treatment,
f) filtering, washing and drying the suspension and recovering the product obtained, characterised in that:
- the vessel bottoms in step (a) contains from 60 to 100 % by weight of silicate,
- in step (b), the time/temperature pairing is regulated so as to cause gelation between 10 and 50 minutes,
- a stop to gelation is observed from 5 to 30 minutes,
- after the stop, the addition of acid is resumed to give a pH value which is at most equal to 9, followed by a post-treatment with an acid with a decreasing pH-value,
- an electrolyte is introduced in at least one of the stages (a), (b), (c), (d), and (e).

3. A process according to Claim 1 or 2, characterised in that the electrolyte comprises a salt from the group of alkali metal and alkaline earth metal salts.

4. A process according to one of Claims 1 to 3, characterised in that the electrolyte is introduced once.

5. A process according to one of Claims 1 to 3, characterised in that the electrolyte is introduced several times.

6. A process according to one of Claims 1 to 5, characterised in that the electrolyte is introduced before the gel appears.

7. A process according to one of Claims 1 to 5, characterised in that the electrolyte is introduced at the time when the gel appears.

8. A process according to one of Claims 1 to 5, characterised in that the electrolyte is introduced after the gel appears.

9. A process according to one of Claims 1 to 8, characterised in that the drying operation comprises forming a symmetrical vortex-axial flow configuration, with a hot gas, having a high degree of momentum, and introducing the suspension of silica along the axis of revolution of the flow, in the relative depression area thereof, the momentum of said vortex-axial flow configuration which is symmetrical with respect to the axial flow of the suspension being sufficient to cause the axial flow to be broken up, dispersed and taken over.

10. The use of silicas obtained by the process according to one of the preceding Claims, for reinforcing elastomers.

11. The use of the silicas obtained by the process according to one of the preceding Claims, as thickening agents.